# EUROPEAN PATENT SPECIFICATION

(11) **EP 2 881 441 B1**
(45) Date of publication and mention of the grant of the patent: **25.05.2016**
(21) Application number: 14195291.1
(22) Date of filing: 27.11.2014
(51) Int. Cl.: C09D 5/00

(54) **Methods for producing marine antifouling signs**
Verfahren zur Herstellung von marinen, fäulnisverhindernden Schildern
Procédés de production de signes d'antisalissure marins

(30) Priority: 27.11.2013 GB 201320904
(43) Date of publication of application: 10.06.2015
(73) Proprietor: The Champion Partnership, Aberdeen, Aberdeenshire AB12 3QH (GB)
(72) Inventor: Milne, Alastair John, Tullos Aberdeen AB12 3 QH (GB)
(74) Representative: Lincoln, Matthew

(56) References cited:
- EP-A1- 0 063 388
- EP-A2- 2 325 784
- EP-A2- 2 571 009
- GB-A- 2 434 022
- US-A- 4 603 653

## Description

The present invention relates to a method of producing antifouling sign assemblies, and to antifouling sign assemblies comprising a transparent antifouling layer and a substrate. In particular, but not exclusively, it relates to antifouling sign assemblies for mounting on a structure to be deployed subsea and methods of production thereof. More particularly, but not exclusively, the method of production relates to the use of liquid silicone rubbers, high consistency silicones or room temperature vulcanising silicones for providing a transparent antifouling layer for an antifouling sign assembly.

### Background to the invention

Identification markers and sign assemblies are used in marine environments, and in particular (but not exclusively) for marking or providing information about an object located below the sea surface or on the seabed. Such identification sign assemblies have particular use in the oil and gas exploration and production industries and include various different visual indicia (typically numerals, letters, words, phrases, sentences, and regular or irregular shapes).

Subsea signs are required to be mounted on a subsea structure for extended periods of time in the harsh conditions encountered in subsea environments. Sign assemblies including indicia and other objects located subsea are susceptible to fouling such as biofouling by aquatic organisms (for example grasses, algae, barnacles, tube worms, sepula, oysters, ascidia, bryozoa and the like), which tend to obscure the indicia, making the sign illegible.

In an effort to overcome these problems, methods of forming subsea sign assemblies from polymeric antifouling silicone-based compositions have been developed. Antifouling or anti-biofouling is the prevention or counteraction of the accumulation of fouling by marine algae, animals, microorganisms or aquatic organisms on underwater surfaces or subsea structures. Manufacturing signs bearing indicia or markings from antifouling materials is non-trivial, due to the material properties.

European Patent Specification No. EP0171110 describes polymeric antifouling silicone-based compositions that can be used to produce subsea antifouling signs. By incorporating fluorescent pigments into the polymeric compositions, different characters, lettering and other indicia can be formed. The formed characters and other indicia are incorporated into a moulded or "high-built" layer made of the same polymeric material.

Figure 1 shows a typical sign assembly produced by the method of EP0171110. The sign assembly comprises a moulded layer 11 of polymeric antifouling material in which there is embedded indicia 12 made from the same polymeric antifouling material of a different colour than the high-built layer. The sign assembly comprises a backing layer 13 which can act as an impermeable layer and/or as a means of bonding the sign assembly to a subsea structure.

A related method of moulding antifouling signs is described in British Patent Publication No. 2,326,372. The described method includes forming one or more inserts on a mould face, which defines a surface of the moulded article. Openings in a mask provide an outline of the inserts that subsequently constitute the indicia of the sign. The mask is located on the mould face and the openings are filled with a coloured material. After the coloured material has cured the mask must be removed from the mould before a second material can be introduced into the mould. The second material is then added to the mould while the mould face is maintained in an orientation inclined to the horizontal.

While the second material hardens, gas bubbles in the moulded material escape through a gas-outlet in an upper part of the mould. The second material provides the bulk component of the sign, supporting the various inserts.

While the moulding method and apparatus described in British Patent Publication No. 2,326,372 could provide for shorter curing periods compared with conventional methods, the method is complicated and comprises several steps, not least the positioning and removal of the mask from the mould face. Each step takes time and uses valuable materials.

Whilst the signs made from polymeric antifouling materials found in the state of the art are effective in resisting aquatic growth, the methods described are labour intensive, which are especially inconvenient when large quantities of the same sign model are to be produced. Production of large batches of signs with the described methods is costly and difficult, and the required reproducibility from sign to sign can be often compromised.

The silicone compositions used for manufacturing subsea signs have inherent limitations regarding the pigments that can be incorporated to form an appropriate background colour, or coloured indicia and other characters. Therefore there are limited colour choices for the background of the sign and its indicia. This is of special importance if special pigments with desirable characteristics such as fluorescence need to be employed in the signs. It can also be difficult to produce signs with indicia having the necessary resolution and legibility, especially if the indicia are complex.

European Patent Application No. EP 2,325,784 describes a subsea antifouling sign which incorporates electronically readable and/or writable information. Figure 2 shows a subsea antifouling sign 20 as described in EP 2,325,784. The sign comprises a moulded layer 21 of silicone antifouling material and indicia 22 embedded in the moulded layer. An electronically readable tag 24 is printed on a substrate 23 and is visible through a window 25 cut out from the moulded layer. This improved sign can store and convey much more data than conventional signs, in addition to visible indicia and characters. The increased amount and quality of information comes at a higher cost of the electronic tag and the reading equipment.

A disadvantage of EP 2,325,784 is that in order to allow the electronic tag to be read a window is required to be cut out of the silicone antifouling material such that the tag is visible. The tag area of the substrate is exposed and is vulnerable to fouling.

Alternative approaches include that described in US 6048580, which discloses the use of a fouling release coating for a metal marine vessel. The described method includes providing a first adhesive coating formed from a mixture of silicone elastomer and thinner, and a second adhesive coating from a mixture of silicone elastomer and release additive.

It is also known to coat marine equipment with thin layers of material which has antifouling properties, for example as disclosed in British Patent Publication No. 1,470,465 and British Patent Publication No.1,581,727. A problem with these coatings is that they are made from an antifouling material mixed with one or more solvents to produce a coating that can be painted onto the marine equipment. The use of solvents to dilute the silicone antifouling material may affect the strength and damage tolerance of the coating.

A further problem with these techniques is that the antifouling coating applied is thin and has a short working lifespan, requiring the application of a fresh antifouling coating every few years (for example when a vessel is dry docked). The thin coating of the antifouling material also has a low damage tolerance; any contact could scratch the protective coating and expose the underlying surface to fouling organisms.

A further disadvantage of a thin antifouling coating is that if a barnacle or other aquatic organism is able to attach to the coating it may be able to cut or eat through the thin layer.

Subsea sign assemblies are required to have an operating lifetime throughout the field life of the infrastructure on which they are mounted, which in many cases may be 25 to 40 years. During that time, the equipment may be accessed by divers and/or remotely operated vehicles (ROVs) for the performance of subsea operations, and may be subject to impact from equipment or debris moving in the seawater. The subsea structures and their antifouling signs are also required to be cleaned during their operating lifetimes. Typically this is achieved by the employment of high pressure (5000 psi; 34473 kPa) water jet cleaning systems. A thin coating with a low damage tolerance could be damaged by such a process. In summary, the thin coatings of antifouling material used in the prior art are not be practical for the manufacture of subsea sign assemblies.

It is an object of an aspect of the present invention to obviate or at least mitigate the foregoing disadvantages of the prior art methods and apparatus employed for producing antifouling sign assemblies. One object of the present invention is to improve the efficiency of the production processes. Other objects of the present invention will become apparent from the following description.

### Summary of the invention

According to a first aspect of the invention, there is provided a method of producing an antifouling sign assembly for mounting on a structure to be deployed subsea, the method comprising:
providing a substrate comprising indicia or markings;
providing a layer of silicone-based transparent antifouling material having a minimum thickness of 1mm;
joining the substrate and the layer such that the indicia or markings of the substrate are visible through the layer; and
fixing an attachment means to the substrate and/or the antifouling layer, the attachment means enabling mounting of the antifouling sign assembly to the structure.

By providing a method of producing an antifouling sign assembly comprising a layer of silicone-based transparent antifouling material having a minimum thickness of 1 mm the indicia or markings of the substrate are protected from surface damage. Surface damage can occur due to impact during deployment or from diver or ROV operations.

The silicone-based transparent antifouling layer may be prefabricated (in an earlier processing method), and may be used in the method after fabrication. Alternatively, the method may comprise forming the layer of silicone-based transparent antifouling material and joining it to the substrate.

By providing a layer of silicone-based transparent antifouling material aquatic organisms are prevented from attaching to the sign assembly. The silicone layer has a low surface energy and it is not easily wetted. Therefore it is difficult for aquatic organisms to form a bond with the silicone layer. Silicone also has a relatively soft anti-adhesive surface which deters marine organisms from attaching and forming colonies.

The layer may be optically clear, and may have a total transmittance in the visible electromagnetic spectrum which is sufficient for a viewer to distinguish the indicia or markings of the sign from a viewing position. Thus the total transmittance of the layer may allow markings on the substrate to be read clearly in subsea locations where poor visibility conditions are experienced. The viewer may be a diver, or may be a remote viewer to whom an image of the sign is transmitted from a subsea camera, which may be operated by a diver or an underwater device such as an ROV or an AUV.

The layer may have low optical reflectivity characteristics, and may therefore reduce the amount of incident light (for example from a light source operated by a diver or an underwater device such as an ROV or an AUV) which is reflected from an upper or outer surface of the layer.

The antifouling layer may be formed by a technique selected from the group comprising:
calendering, extrusion, compression moulding, dispersion coating, liquid lamination, ribbon flowing, liquid moulding and internal casting. Preferably, the method comprises forming the layer of silicone-based transparent antifouling material in an online or continuous process.

The silicone-based transparent antifouling layer may be provided in a continuous form for forming multiple sign assemblies, for example as a rolled sheet, which may be deployed from a storage reel. Alternatively the silicone-based transparent antifouling layer may be provided in discrete sections for joining to the substrate. When the silicone-based transparent antifouling layer is provided in a continuous form, the method may be particularly suitable for producing sign assemblies in large quantities.

When the silicone-based transparent antifouling layer is provided in discrete sections, the method may be more suitable for the production of small quantities of sign assemblies or bespoke sign assemblies.

Likewise, the substrate may be provided in a continuous form for forming multiple sign assemblies, for example as a rolled band of flexible material such as a plastic. Alternatively the substrate may be provided in discrete sections, for example as individual pieces of flexible or rigid material. The method may comprise deploying the substrate from a storage reel and joining the layer to the substrate.

The production of subsea sign assemblies in a continuous or discrete form may provide a cost effective and time efficient method of customising subsea structures. The current practice for subsea operators uses flame/water jet cut outs from a metal panel which is affixed to the subsea structure to form a makeshift sign as a means of differentiating the structure from similar structures.

The method may comprise forming the layer of silicone-based transparent antifouling material simultaneously with joining it to the substrate. The method may comprise joining the layer to the substrate using at least one system of rollers.
The method may comprise applying a primer or adhesive between the layer and the substrate. The addition of a primer or adhesive may be effected by brushing, spraying, spreading or other suitable method in order to distribute the primer or adhesive between the substrate and the silicone-based transparent antifouling layer. The primer and/or adhesive improve the joining between the silicone-based transparent antifouling layer and the substrate. Suitable primers include but are not limited to the primer supplied under the product designation Champion Primer^{™} 131 by AQUASIGN®, and suitable adhesives include but are not limited to the adhesive sold under product designation Dow Corning^{®} 732 by Dow Corning Inc.

The method may comprise facilitating the joining of the silicone-based transparent antifouling layer to the substrate by applying heat to the layer and/or the substrate. Alternatively the addition of energy may be in the form of ultraviolet (UV) radiation, ultrasound, microwaves or other suitable form of energy, including adding heat by convection. The addition of energy may help volatilise a solvent of the adhesive and aid in the formation of adhesive bonds. The addition of energy may activate a primer in order to achieve a strong bond between the substrate and the transparent antifouling layer. The addition of energy may also help to finalise the curing of the transparent antifouling layer.

Preferred methods of forming a silicone-based transparent antifouling layer include calendering, extrusion, compression moulding, dispersion coating, liquid lamination, ribbon flowing, liquid moulding, spraying and internal casting. These methods of forming the silicone-based transparent antifouling layer are suitable for providing the transparent antifouling layer in a continuous form. Alternatively the silicone-based transparent antifouling layer may be formed by moulding. The mould may be an open or closed mould.

The layer may be formed by spraying the silicone-based transparent antifouling material onto the substrate.

The methods of forming the silicone-based transparent antifouling layer may comprise partial or full curing of the silicone-based transparent antifouling layer.

Preferred materials for forming a silicone-based transparent antifouling layer are liquid silicone rubber (LSR) compositions, high consistency silicone (HCS) compositions, room temperature vulcanising (RTV) silicone compositions and/or fluorosilicones.
Liquid silicone rubber (LSR) compositions are silicone-based compositions which curing can be facilitated by applying energy to them and they are flowable during their processing. LSR compositions have a viscosity generally between 100,000 and 10⁶ mPa s. They are normally bi-component compositions and may be platinum cured or peroxide cured. LSR compositions are typically cured between 60 °C and 150 °C. LSR compositions present low shrinkage during and after processing and exhibit good mechanical properties when they are cured.

Preferred methods of forming a silicone-based transparent antifouling layer comprising LSR compositions include liquid lamination, ribbon flowing, liquid moulding and internal casting.

High consistency silicone (HCS) compositions are silicone based compositions which curing can be facilitated by applying energy to them and they are non-flowable during their processing. HCS compositions generally have viscosities greater than 50 x 106 mPa s. HCS compositions comprise a curing agent that is only active at high temperatures. HCS compositions are normally compressed and heated up to 120 to 140 °C. HCS compositions present low shrinkage during and after processing and exhibit good mechanical properties when they are cured.

Preferred methods of forming a silicone-based transparent antifouling layer comprising HCS compositions include calendering, extrusion, compression moulding and dispersion coating.

Room temperature vulcanising (RTV) silicone compositions are silicone-based compositions that can cure at room temperature. Faster curing can be facilitated by applying energy to the composition. RTV compositions can contain a platinum or tin catalyst to facilitate curing. RTV silicone compositions can be either one part or two part compositions. RTV silicones present low shrinkage during and after processing and are able to withstand stress and temperature extremes.

Room-temperature-vulcanising one-component rubbers (RTV-1) are ready to use one component compositions that comprise crosslinking agents. Crosslinking is initiated by contact with atmospheric moisture and proceed with the elimination of by-products.

Room-temperature-vulcanising two-component rubbers (RTV-2) are two component, pourable, spreadable or kneadable compounds that cure to flexible silicone rubbers on addition of a cross-linking agent. Newer developments also allow one component RTV-2 (pre-mixed, inhibited) which cure at high temperatures.

Preferred methods of forming a silicone-based transparent antifouling layer comprising RTV compositions include calendering, extrusion, moulding, ribbon flowing, internal casting and spraying into a mould or onto the substrate.

In one embodiment the silicone-based transparent antifouling layer may be formed by calendering a silicone composition, which may be an HCS composition. Alternatively the silicone-based transparent antifouling layer may be formed by extruding a silicone composition, which may be an HCS composition, or by moulding an HCS composition. The silicone-based transparent antifouling layer may also be formed by dispersion coating of a solution of a HCS composition.

In another embodiment the silicone-based transparent antifouling layer may be formed by liquid lamination of a LSR composition. Alternatively the silicone-based transparent antifouling layer may be formed by ribbon flowing, internal casting or liquid moulding of a LSR composition.

In a further embodiment the silicone-based transparent antifouling layer may be formed by calendering a silicone composition, which may be a RTV silicone composition. Alternatively, the silicone-based transparent antifouling layer may be formed by extruding ribbon flowing, moulding, spraying or internal casting of a RTV composition.

The substrate may be pre-marked (in an earlier processing method), and may be used in the method after marking. Alternatively, the method may comprise marking the substrate prior to joining the substrate and the silicone-based transparent antifouling layer. The substrate may be marked in an online or continuous process.

By marking the substrate different indicia and characters may be incorporated to the antifouling sign assembly, and the production method may be adjusted or modified online to produce sign assemblies with different markings. The substrate may be marked by a technique selected from the group comprising: chemical etching, laser etching, rotary engraving, laser engraving, screen printing, pad printing, digital printing, subliminal printing, thermal transfer printing, photo etching, wet painting or powder painting.

These methods of marking the substrate do not impose colour limitations to be used for representing the desired indicia or characters, as the silicone material itself does not need to be marked or coloured. By having the markings on the substrate smaller characters or complex characters can be formed. Another benefit is that these methods of marking the substrate allow complicated indicia and characters to be represented in the antifouling sign. The reproducibility of the indicia and other graphical representations is significantly improved over antifouling signs described in the prior art. The transparency of the silicone-based antifouling layer ensures that the graphical representations of the substrate are visible when the sign is in use.

By providing the markings on the substrate it avoids the need to add pigments to the silicone layer. The addition of pigments to a silicone layer may reduce the effectiveness of the silicone layer by altering its surface profile. After the addition of pigments, the silicone layer may appear and feel smooth but under high-powered microscopes it may be uneven and coarse which may provide an anchor point for aquatic organisms to take hold and cause fouling. The use of pigment may also reduce the damage tolerance of the sign.

The method may comprise dividing the joined substrate and silicone-based transparent antifouling layer into individual antifouling sign assemblies.

The method may comprise moulding the layer with the substrate to join the layer to the substrate. The method may comprise moulding the layer with the substrate in a frame, wherein the frame forms a part of a finished sign assembly.

The method may comprise providing a layer having a minimum thickness of 2mm. Alternatively, the method may comprise the layer having a minimum thickness of 3mm, 4mm or 5mm.

The method may comprise providing a layer having a thickness range of 1 mm to 20mm. Preferably the method may comprise the layer having a thickness range of 2mm to 10mm.

The method may comprise providing a layer having a critical surface tension range of 15 to 40 dyne/cm. Preferably, the method may comprise providing a layer having a critical surface tension range of 20 to 30 dyne/cm. More preferably the method may comprise providing a layer having a critical surface tension range of 22 to 24 dyne/cm.

The inventor appreciates that organic matter in an aqueous solution has a tendency to collect at both the solid-water and the solid-air interfaces. This process involves the segregation of species resulting in a reduction in entropy of the system and it would not take place spontaneously in nature unless there was an overall reduction in free energy of the system. The reduction in energy is related to the replacement of the interfacial tension at the solid-water interface by a lower energy organic film.

The critical surface tension range of seawater is approximately 22 to 24 dyne/cm. By providing a method which may comprise providing a substrate having a surface tension close to the surface tension of water the driving force for segregation is significantly reduced and the organic matter is less likely to attach to the substrate and cause fouling.

The method may comprise the attachment means is selected from the group comprising an adhesive, band, bolts, cable, chain, cord, line, ligament, rope, screws, string, strap, weld, wire or wire rope.

Preferably, the attachment means is an adhesive. Further preferably, the attachment means is an adhesive layer. For example, the adhesive layer may be one commercially available from AQUASIGN® under product designation KISS®. Alternatively or in addition the adhesive layer may comprise a silicone adhesive, a polyurethane adhesive, cyanoacrylates, acrylic adhesive or an epoxy material.

Preferably any gaps between the perimeter of the subsea antifouling sign assembly and the subsea structure is sealed with a bead of adhesive material. Preferably the adhesive material is water impermeable. Suitable adhesive materials for sealing a gap between the perimeter of the subsea antifouling sign and the subsea structure or equipment surface include acrylic cement and/or RTV silicones.

According to a second aspect of the invention, there is provided a method of mounting an antifouling sign assembly to a structure to be deployed subsea, the method comprising: providing a subsea antifouling sign assembly, the assembly comprising:
a substrate comprising indicia or markings;
attachment means for attaching the sign assembly to the structure;
and a layer of silicone-based transparent antifouling material; and
attaching the subsea antifouling sign assembly to the structure such that the indicia or markings of the substrate are visible through the layer.

Embodiments of the second aspect of the invention may include one or more features of the first aspect of the invention or its embodiments, or vice versa.

According to a third aspect of the invention, there is provided an antifouling sign assembly for mounting on structure to be deployed subsea, the sign assembly comprising a substrate having indicia or markings formed thereon, an attachment means for attaching the sign assembly to the structure and a layer of silicone-based transparent antifouling material having a minimum thickness of 1 mm joined to the substrate such that the indicia or markings are visible through the layer.

Preferably the silicone-based transparent antifouling layer comprises a compositions selected from the group comprising liquid silicone rubber (LSR), high consistency silicones (HCS) and/or room temperature vulcanising (RTV) silicone compositions. Alternatively the silicone-based transparent antifouling layer comprises compositions selected from the group of fluorosilicone compositions.

The above-mentioned groups of silicone-based antifouling compositions allow the formation of transparent antifouling layers to be carried out continuously, resulting in antifouling layers with good transparency and satisfactory mechanical properties. The provision of transparent antifouling layers with good mechanical properties in continuous is combined with the continuous provision of a substrate, preferably marked, to produce antifouling sign assemblies in more efficient way than with the state of the art methods.LSR, HCS, RTV and fluorosilicone compositions can be processed in order to exhibit good transparency and good mechanical properties after they have cured.

The silicone-based transparent antifouling layer may comprise an exuding liquid. The exuding liquid prolongs the antifouling properties of the silicone-based transparent antifouling layer and therefore extends the service life of the antifouling sign assembly. Suitable exuding liquids include silicone oils and/or polybutene oils currently used in silicone-based subsea antifouling sign assemblies.

The substrate may be flexible. Alternatively the substrate may be rigid. A flexible substrate may be more suitable for a continuous production method.

The substrate may comprise polyethylenterephtalate (PET). PET is water impermeable and can be digitally, screen, pad or hand printed. Alternative materials for the substrate include fabrics, nylon, polycarbonate, polyether ether ketone (PEEK), polyvinylchloride (PVC), polyacrylonitrile-butadiene-styrene (ABS), Margard^{®} coated materials, high density polyethylene (HDPE), acetalic materials, vinylic materials, or acrylic materials.

The substrate may comprise a reflective material to allow high visibility, such as reflective vinyl and/or Dibond®. Alternatively, the substrate may comprise reflective particles embedded in the substrate material such as glass particles, prisms or beads.

Alternatively, the substrate may be metal, such as steel, aluminium or brass.

The indicia, alphanumeric characters and/or other graphical representations may be marked on the substrate by chemical etching, laser etching, rotary engraving, laser engraving, screen printing, pad printing, digital printing, subliminal printing, photo etching, painting (wet or powder), etc.

The sign assembly is designed for use in marine or offshore environments at surface or subsea, but has particular benefits to subsea use, i.e. application to items of subsea equipment and infrastructures such as those used in the oil and gas exploration and production industry.

The sign may comprise a frame. Preferably the layer is moulded into the frame. Preferably the frame comprises one or more apertures for receiving a securing bolt.

The sign may comprise a mount. The mount may provide the sign assembly with stand-off from the subsea structure. Optionally the mount may comprise a fixing frame. The fixing frame may be located around the perimeter of the antifouling material. The mount may be used to secure the antifouling sign to a subsea structure. Preferably the fixing frame comprises one or more apertures for receiving a securing bolt.

The layer may comprise a minimum thickness of 2mm. Alternatively, the layer may comprise a minimum thickness of 3mm, 4mm or 5mm.

The layer may comprise a thickness range of 1 mm to 20mm. Preferably layer may comprise a thickness range of 2mm to 10mm.

The layer may comprise a critical surface tension range of 15 to 40 dyne/cm. Preferably, the layer may comprise the layer having a critical surface tension range of 20 to 30 dyne/cm. More preferably the layer may comprise the layer having a critical surface tension range of 22 to 24 dyne/cm.

The critical surface tension range of seawater is approximately 22 to 24 dyne/cm. By providing a substrate having a surface tension close to the surface tension of water the driving force for segregation is significantly reduced and the organic matter is less likely to attach to the substrate and cause fouling.

Embodiments of the third aspect of the invention may include one or more features of the first and/or second aspect of the invention or its embodiments, or vice versa.

According to a fourth aspect of the invention, there is provided a subsea structure comprising an antifouling sign assembly, wherein the antifouling sign assembly is formed by a method according to the first aspect of the invention.

Embodiments of the fourth aspect of the invention may include one or more features of the first to third aspects of the invention or their embodiments, or vice versa.

According to a fifth aspect of the invention, there is provided a subsea structure comprising an antifouling sign assembly according to the third aspect of the invention.

Embodiments of the fifth aspect of the invention may include one or more features of the first to fourth aspects of the invention or their embodiments, or vice versa.

According to a sixth aspect of the invention, there is provided a subsea structure comprising an antifouling sign assembly, wherein the antifouling sign assembly is mounted on the subsea structure according to the second aspect of the invention.

Embodiments of the sixth aspect of the invention may include one or more features of the first to fifth aspects of the invention or their embodiments, or vice versa.

According to a further aspect of the invention, there is provided an sign assembly for mounting on structure to be deployed subsea, the sign assembly comprising a substrate having indicia or markings formed thereon, an attachment means for attaching the sign assembly to the structure and a layer of transparent material joined to the substrate such that the indicia or markings are visible through the layer.

Preferably the substrate may comprise a reflective material to allow high visibility, such as reflective vinyl. Alternatively, the substrate may comprise reflective particles embedded in the substrate material such as glass particles, prisms or beads.

The layer of transparent material may be applied to one surface of the substrate or it may fully or partially encapsulate the substrate. Preferably the layer of transparent material fully encapsulates the substrate.

The layer of transparent material may be selected from the group comprising clear silicone, clear plastic laminate or film, toughened glass, perspex or other clear plastics.

According to yet further aspects of the invention, there is provided antifouling sign assemblies, methods of forming and mounting antifouling sign assemblies, and subsea structures comprising an antifouling sign assembly substantially as herein described with reference to the appended drawings.

### Brief description of the drawings

There will now be described, by way of example only, various embodiments of the invention with reference to the drawings, of which:
Figure 1 is an isometric view of a typical subsea antifouling sign assembly as known in the prior art;
Figure 2 is an isometric view of a subsea antifouling sign assembly as described in the prior art comprising a window to electronically readable and/or writable information borne on a substrate;
Figures 3A and 3B are respectively schematic views showing a method of forming a sign assembly according to a first embodiment of the invention;
Figure 4 is a schematic view of a continuous method of production of subsea antifouling sign assemblies according to an embodiment of the invention;
Figure 5 is a schematic view of a continuous method of production of subsea antifouling sign assemblies according to an alternative embodiment of the invention;
Figure 6 is a schematic view of a continuous method of production of subsea antifouling sign assemblies according to an embodiment of the invention;
Figures 7A to 7D show schematically a method of production of subsea antifouling sign assemblies according to an embodiment of the invention; and
Figures 8A to 8D show schematically a method of production of subsea antifouling sign assemblies according to a further alternative embodiment of the invention.
Figure 9A to 9B show schematically a method of production of subsea antifouling sign assemblies according to an embodiment of the invention.
Figure 10A to 10D show schematically a method of production of subsea antifouling sign assemblies according to an embodiment of the invention.
Figure 11A to 11D show schematically a method of production of subsea antifouling sign assemblies according to a further embodiment of the invention.
Figure 12A to 12D show schematically a method of production of subsea antifouling sign assemblies according to a further embodiment of the invention.

### Detailed description of preferred embodiments

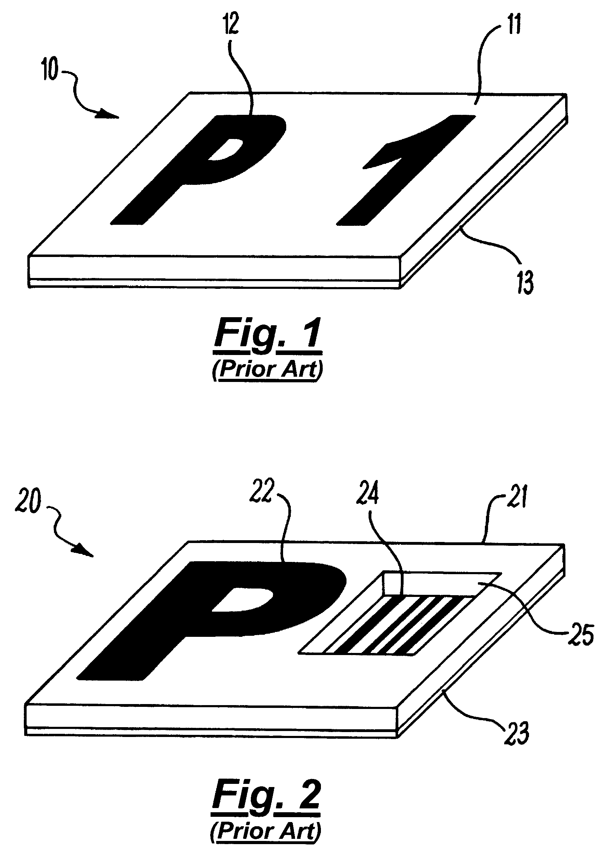

As described above, Figures 1 and 2 show features of subsea antifouling sign assemblies according to the prior art.

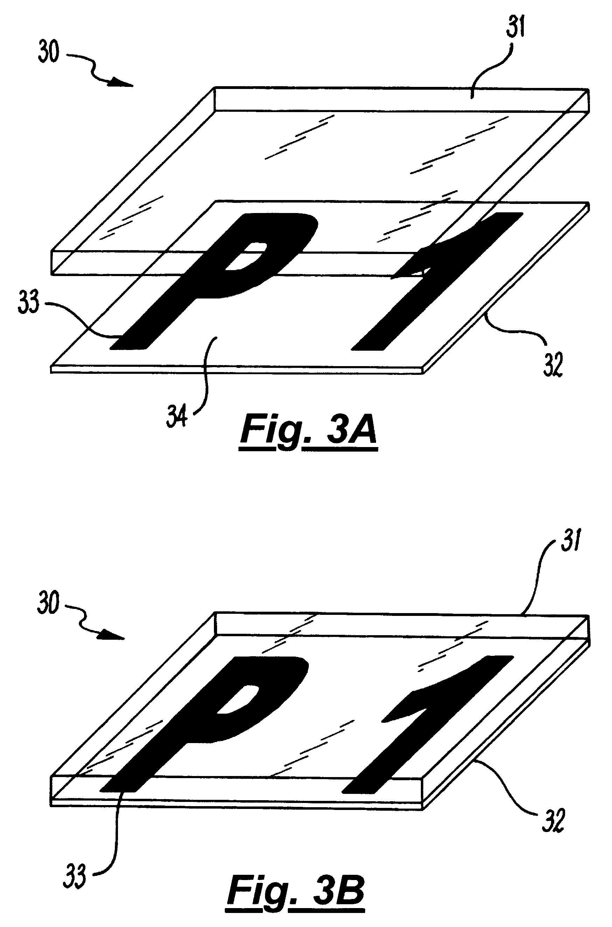

Figures 3A and 3B show a subsea antifouling sign assembly, generally depicted at 30, according to an embodiment of the present invention. The sign 30 comprises a silicone-based transparent antifouling layer 31 and a substrate 32. On the substrate 32 are marked alphanumeric characters 33 in a colour that contrasts with the colour of the background 34 of the substrate 32. In this embodiment, the transparent antifouling layer 31 is formed from a high consistency silicone (HCS) composition which provides a good resistance to marine bio-fouling, and has good light transmission properties. In this embodiment, the HCS composition used is the peroxide cured HCS composition supplied under the product designation ELASTOSIL® R by Wacker Chemie (although it will be appreciated that liquid silicone rubber (LSR), room temperature vulcanising (RTV) silicone and other HCS compositions may be used within the scope of the invention).

The substrate 32 is formed from a plastic material, which in the case is polyvinyl chloride (PVC). The use of a separate substrate (which in this case is not an antifouling material) allows the alphanumeric characters 33 to be marked on the substrate 32 by a printing process. In this embodiment, screen printing is used to form the characters, which is a simple way of marking the substrate and does not involve expensive equipment. Additionally, screen printing produces markings with high reproducibility. Screen printing is suitable for marking complicated graphical designs and patterns and is applicable to a wide range of substrate materials.

In forming the sign 30, the substrate 32 bearing the markings 33 is joined with the transparent antifouling layer 31 to form a sign which has visible markings through the antifouling layer. Optionally, a primer or adhesive can be applied between the substrate 32 and the layer 31 to improve the join and therefore increase durability and the integrity of the sign. Suitable primers include but are not limited to the primer supplied under the product designation Champion Primer^{™} 131 by AQUASIGN®, and suitable adhesives include but are not limited to the adhesive sold under product designation Dow Corning^{®} 732 by Dow Corning Inc.

The silicone-based transparent antifouling layer 31 covers the alphanumeric characters 33, to create an antifouling surface through which the alphanumeric characters 33 are visible in use. The substrate 32 may be affixed to an item of subsea infrastructure in a conventional manner, and the resulting antifouling sign 30 exhibits integrity and durability suitable for use subsea. The alphanumeric characters 33 of the subsea antifouling sign 30 are protected by the silicone-based transparent antifouling layer 31.

The sign 30 and its manufacturing process offer several advantages over the signs and processes of the prior art. Firstly, the use of a transparent silicone antifouling layer (in this case HCS) provides excellent antifouling performance while offering flexibility and economy of manufacture. In particular, the markings or indicia which convey information to a user of the sign may be borne on the substrate. This avoids the difficulties associated with forming (by moulding) markings or indicia in the body of the antifouling layer itself. Instead, the markings may be formed on a substrate by a flexible, cost effective, and highly reproducible technique. For example, in the embodiment above, the substrate is PVC and the markings are formed by printing. Other techniques (including a range of printing techniques) are suitable for other substrates. For example, other suitable plastic materials for the substrate include but are not limited to, polyethylenetereftalate (PET), nylon and polyether, and suitable marking methods include but are not limited to rotary engraving, etching (including laser etching), pad printing and painting.

The indicia formed on the sign assembly are protected by the transparent silicone layer from surface damage, for example due to impact during deployment or from diver or ROV operations. This contrasts with the moulding methods used in the prior art: firstly, the moulding technique places indicia on the outer surface of the sign where they would be subject to impact; and secondly, the moulding technique limits the thickness of the indicia to around 80 micron to 300 micron. This means that impacts can cause the indicia to be illegible or completely removed from the sign. The present invention protects the indicia so that even if the surface of the sign is damage, the indicia are much more likely to remain legible.

Importantly, by using a transparent layer and providing the visual content of the sign in other components of the sign assembly, the manufacturing process is not limited to the use of dyes and pigments which are suitable for use with the antifouling silicone layers used in conventional signs. This provides additional flexibility of pigment choice, which allows the production of more complex or intricate sign assemblies. It also allows sign assemblies to be produced which have an extended working life; conventionally some silicone-compatible dyes (such as fluorescent dyes) have faded or discoloured in storage or use.

HCS compositions are preferred in some applications because they exhibit superior mechanical properties than room temperature vulcanizing silicone compositions. This may be particularly significant in marine antifouling applications, as blemishes provide anchoring points for bio-fouling. When finished, an HCS composition may present a very smooth surface which may be resistant to the impacts and rough handling likely to be encountered offshore.

Other suitable materials for the antifouling layer include but are not limited to the platinum cured HCS composition supplied under the product designation ELASTOSIL® R Plus by Wacker Chemie. High consistency silicone compositions are silicone-based compositions that typically require temperatures between 120 and 140 °C to be cured. They are non-flowable compositions, having viscosities greater than 20 x 10⁶ mPa s. HCS compositions are cured by adding a curing agent and increasing its temperature. This can be accomplished in a heating press or in a curing oven. Alternative methods include hot-air vulcanising, salt baths, continuous vulcanisation in steam and autoclave vulcanisation. Typical curing times are less than one hour. HCS silicone compositions can be processed in a number of ways, including calendering, extrusion, compression moulding and dispersion coating (when the HCS compositions are dispersed in a solution). The range of manufacturing techniques facilitate a number of different techniques for forming antifouling signs economically, as will be apparent from the description below and accompanying drawings.

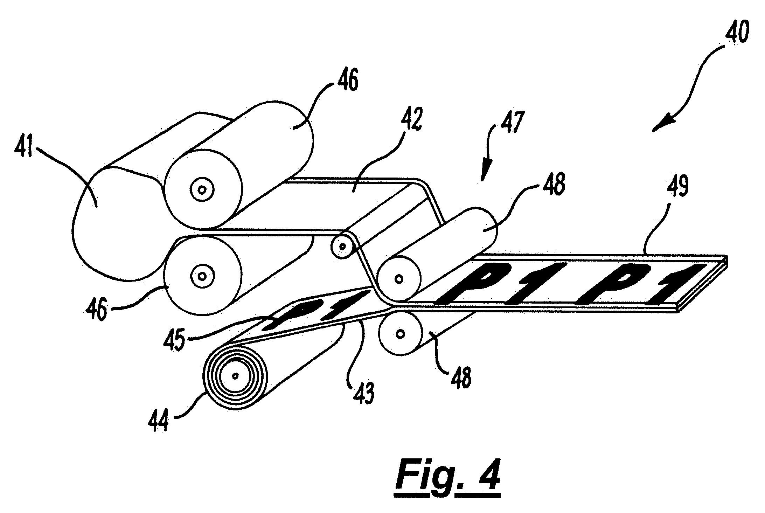

With reference now to Figure 4, there is shown schematically a production facility, generally depicted at 40, useful for describing a continuous method of production of antifouling sign assemblies for mounting on a structure to be deployed subsea according to an embodiment of the invention. In this embodiment, the silicone-based transparent antifouling layer 42 is formed by calendering a volume 41 of the HCS composition into a layer of the desired thickness by regulating the space between calendering rollers 46. Typical values for the thickness of the silicone-based transparent antifouling layer are 2mm to 10mm, although a range of thicknesses between 1 to 20 mm may be formed depending on the application.

A PVC substrate 43 is preformed, with markings or indicia 45 formed on the surface, in this case by printing. The substrate 43 is deployed continuously from a storage reel 44 to a joining apparatus, shown generally at 47. The joining of the silicone-based transparent antifouling layer 42 and the substrate 43 takes place when both meet between the joining rollers 48. The joining of the silicone-based transparent antifouling layer 42 and the substrate 43 is facilitated by applying pressure and heat when they pass between the joining rollers 48. The curing of the HCS composition is facilitated by the heat applied in the calendering equipment and on the joining rollers 48. A continuous band 49 of the integrated substrate and antifouling material is output from the facility and can be later formed into sign assemblies of an appropriate size and shape.

The above-described embodiment is particularly suitable for producing subsea antifouling sign assemblies in large quantities at an affordable cost. The method of production is less labour intensive and has improved reliability and reproducibility than methods described in the prior art. Additionally, the method of production depicted in Figure 4 can be implemented with a high degree of automation and therefore the sign assemblies produced are accurately reproduced.

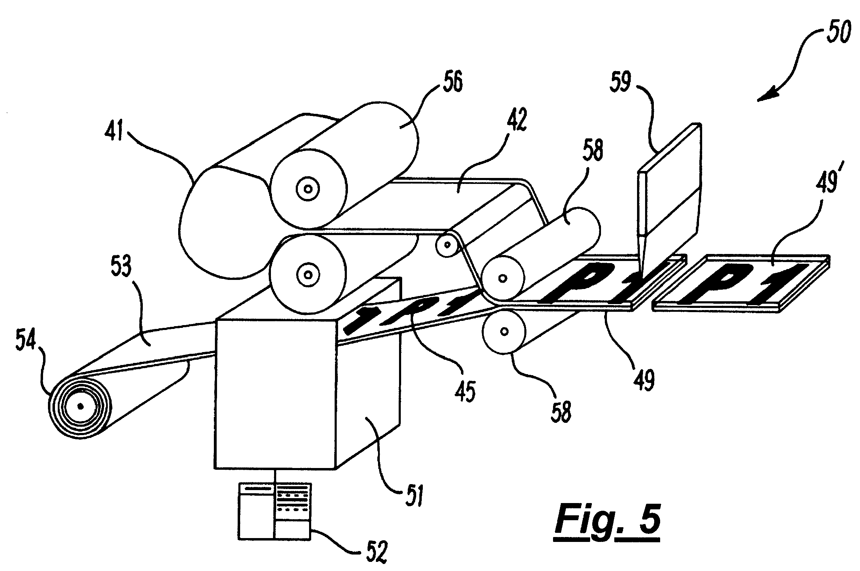

With reference now to Figure 5, there is shown schematically a production facility, generally depicted at 50, useful for describing a continuous method of production of subsea antifouling sign assemblies according to an alternative embodiment of the invention. The facility of Figure 5 is similar to the facility 40 and this embodiment will be understood from Figure 4 and the accompanying description. In this embodiment the method includes an additional step of marking the substrate, which is carried out online using printing equipment 51. The substrate 53 is unmarked, and is deployed from a storage reel 54 to the printing equipment 51, which in this case is an inkjet printer controlled from an external user interface 52. This allows the sign assembly production process to be customised according to user requirements, producing signs with different indicia and markings without substantially interrupting the process. The method also comprises the step of cutting the continuous output 49 into individual signs 49' by using a cutter 59.

The embodiments described above use HCS compositions for forming the transparent antifouling layer. Other transparent silicone antifouling compositions may be used within the scope of the invention, and the inventor has appreciated that liquid silicone rubber (LSR) and room temperature vulcanising (RTV) silicone compositions also offer particular advantages in this application.

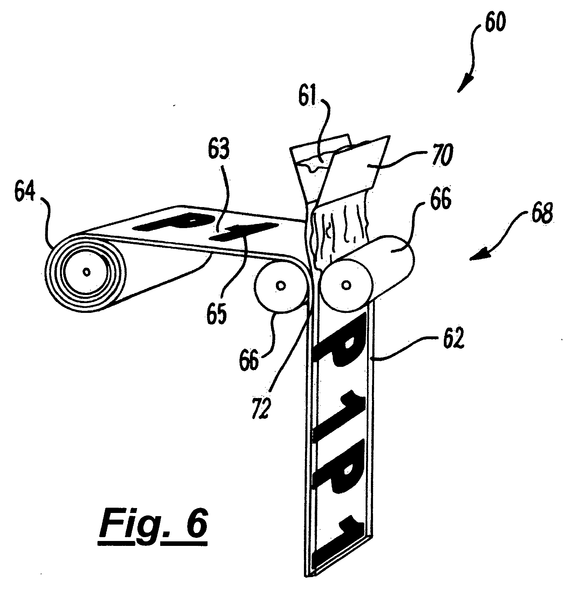

Figure 6 shows schematically a production facility, generally depicted at 60, useful for describing a continuous method of production of antifouling sign assemblies according to an alternative embodiment of the invention using a liquid silicone rubber (LSR) composition 61 for forming the silicone-based transparent antifouling layer 62. In this embodiment, the formation of the silicone-based transparent antifouling layer is accomplished by a liquid lamination method. The LSR composition used is the platinum cured LSR composition supplied under the product designation ELASTOSIL® LR by Wacker Chemie (although it will be appreciated that other LSR compositions may be used within the scope of the invention).

As before, the substrate 63 is pre-marked with indicia 65 (e.g. by etching) and is deployed from a storage reel 64 to a system of rollers 66 in a lamination apparatus 68. The LSR composition 61 is delivered to an elongate funnel 70 with a V-shaped cross section, which has a length corresponding to the desired width for the silicone-based transparent antifouling layer.

The LSR composition is delivered from the outlet of the funnel to the space 72 between the rollers 66 of the laminating equipment 68, as the substrate 63 is passed between the rollers. The formation of the silicone-based transparent antifouling layer 62 takes place simultaneously with its joining with the substrate 63. The joining of the substrate 63 and the silicone-based transparent antifouling layer 62 is facilitated by applying pressure and heat when the materials pass between the rollers 66, and the thickness of the silicone-based transparent antifouling layer is can be regulated by adjusting the space 72 between the rollers 66 of the laminating equipment. The curing of the LSR composition is also facilitated by the heat applied on the rollers 66 of the laminating equipment.

The formation of the silicone-based transparent antifouling layer using liquid lamination of a LSR composition produces less waste material than a calendering process using HCS or RTV compositions. The film thickness can be thinner than in a calendering process and more uniform, because the dosing of the LSR composition is automatically controlled by mass-flow controllers. The silicone-based transparent antifouling layer formed from an LSR composition is able stretch and conform to uneven surfaces better than a HCS or RTV calendered layer. This is particularly advantageous for certain substrate types such as fabrics or substrates to which a roughening treatment has been to promote the joining between the antifouling layer and the substrate.

One advantage of the selection of HCS and/or LSR compositions to form the transparent antifouling layer is their potential for use in continuous or semi-continuous production methods as described above. However, these materials may also be used in the manufacture of discrete sign assemblies or sign assemblies in smaller batches as will be described below.

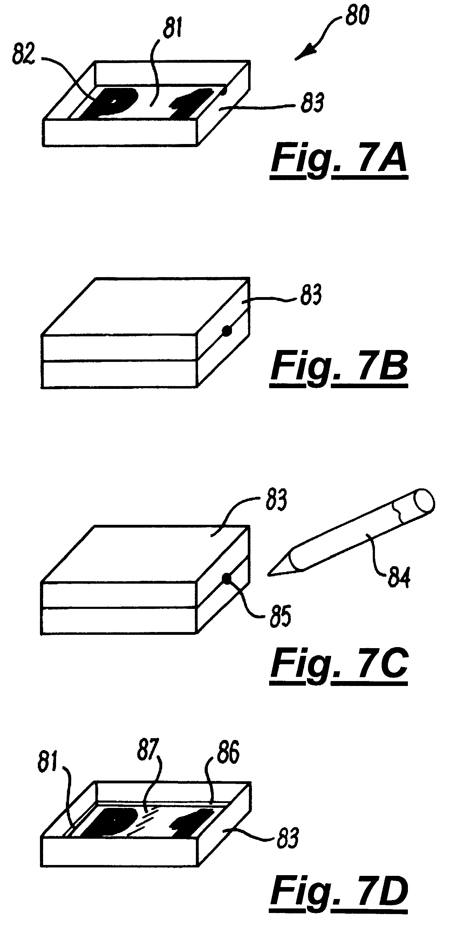

Figures 7A to 7D show schematically a method 80 of production of a subsea antifouling sign using RTV silicone composition for forming the silicone-based transparent antifouling layer. In this method a plastic substrate 81 comprising alphanumeric characters 82 is placed in a first half of a mould 83. The second half of mould 83 is positioned to close the mould 83, as shown in Figure 7B. A RTV composition 84 is subsequently injected into the closed mould 83 through an inlet 85, as shown in Figure 7C. The RTV composition is allowed to cure. When the curing time has elapsed the mould 83 is opened and a subsea antifouling sign assembly 86 is in the mould, as shown in Figure 7D. The antifouling sign comprises a marked plastic substrate 81 and a silicone-based transparent antifouling layer 87 joined to the substrate. The antifouling sign can then be removed from the mould (not shown).

The embodiment described above uses room temperature vulcanising (RTV) silicone compositions for forming the transparent antifouling layer in discrete signs or signs in smaller batches. Other transparent silicone antifouling compositions may be used within the scope of the invention, and the inventor has appreciated that high consistency silicone (HCS) and liquid silicone rubber (LSR) compositions may also be used.

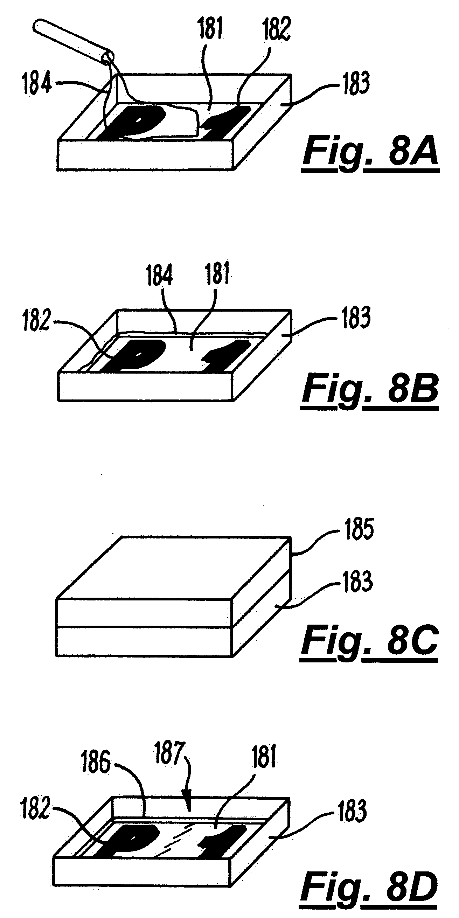

Figures 8A to 8D show schematically an alternative method 180 of production of a subsea antifouling sign using a LSR composition for forming the silicone-based transparent antifouling layer. A plastic substrate 181 comprising alphanumeric characters 182 is placed in an open mould 183 and a LSR composition 184 is subsequently poured in the mould 183, as shown in Figure 8A. The LSR composition 184 is allowed to level itself in the mould (Figure 8B). The mould is closed by the upper part 185 of the mould and heat is applied in order to cure the LSR composition. When the curing time has elapsed the mould 183 is opened and a subsea antifouling sign assembly 187 is produced in the mould, as shown in Figure 8D. The antifouling sign comprises a marked substrate 181 and a silicone-based transparent antifouling layer 186 joined to the substrate. The antifouling sign can then be removed from the mould (not shown).

The method 180 is particularly suited to production of bespoke signs or small batches of signs, as they do not require a set-up period required for producing the first useful signs.

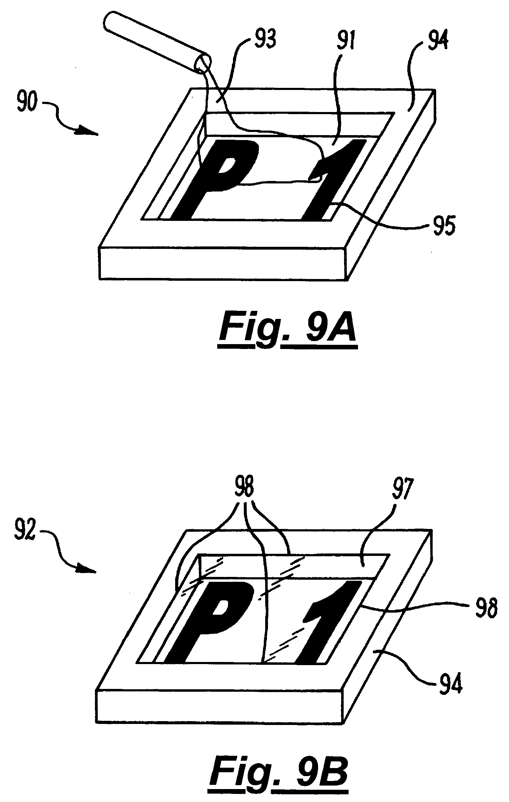

Figures 9A and 9B show schematically a method of production of a subsea antifouling sign using a LSR composition according to an alternative embodiment. In this method, generally shown at 90, a sign 92 is formed with an integral frame 94 formed from a high density polyethylene (HDPE).

A marked substrate 91 comprising alphanumeric characters 95 is placed in the interior of a frame 94, as shown in Figure 9A. An LSR composition 93 is poured on the substrate 91 until the frame 94 is filled with the LSR composition 93. Heat is applied to the LSR composition 93 by placing the frame and silicone layer in an oven, at a temperature sufficient to cure the silicone material but not sufficient to cause the material of the frame to melt (typically the curing temperature will be in the range of 60 °C to 100 °C). When the LSR composition is cured, a subsea antifouling sign 92 comprising an integrated frame 94 is produced which comprises a marked substrate 91 which is joined to a silicone-based transparent antifouling layer 97, as shown in Figure 9B. The peripheral edges 98 of the subsea antifouling sign 92 are protected by the frame 94.

The embodiment described above use liquid silicone rubber (LSR) compositions for forming the transparent antifouling layer in discrete signs or signs in smaller batches. Other transparent silicone antifouling compositions may be used within the scope of the invention, and the inventor has appreciated that high consistency silicone (HCS) and room temperature vulcanising (RTV) silicone compositions may also be used.

The embodiments above describe the joining of the silicone-based transparent antifouling layer with the substrate. The following embodiments describe alternative methods in which the substrate is encapsulated by a silicone-based transparent antifouling material.

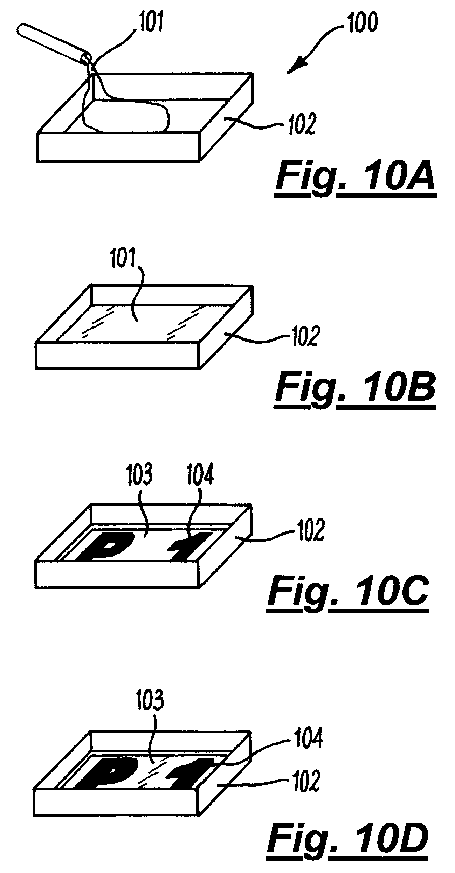

Figures 10A to 10D show schematically a method 100 of production of a subsea antifouling sign using a RTV silicone composition for forming the silicone-based transparent antifouling layer. A RTV silicone composition 101 is poured into an open mould 102 forming a first layer. The RTV silicone composition is allowed to partially cure. Once the composition has partially cured, a reflective vinyl substrate 103 comprising alphanumeric characters 104 is placed onto the first layer of RTV composition. More RTV silicone composition 101 is poured onto the reflective vinyl substrate 103 and first layer of RTV silicone composition. When the first and second layers of RTV silicone composition have cured the sign assembly is released from the mould. The antifouling sign comprises a marked reflective vinyl substrate encapsulated in an antifouling RTV silicone composition. The resulting sign assembly provides highly visible markings which have particular application in deepwater installations where there is not a great deal of natural light (e.g. around 300m or deeper).

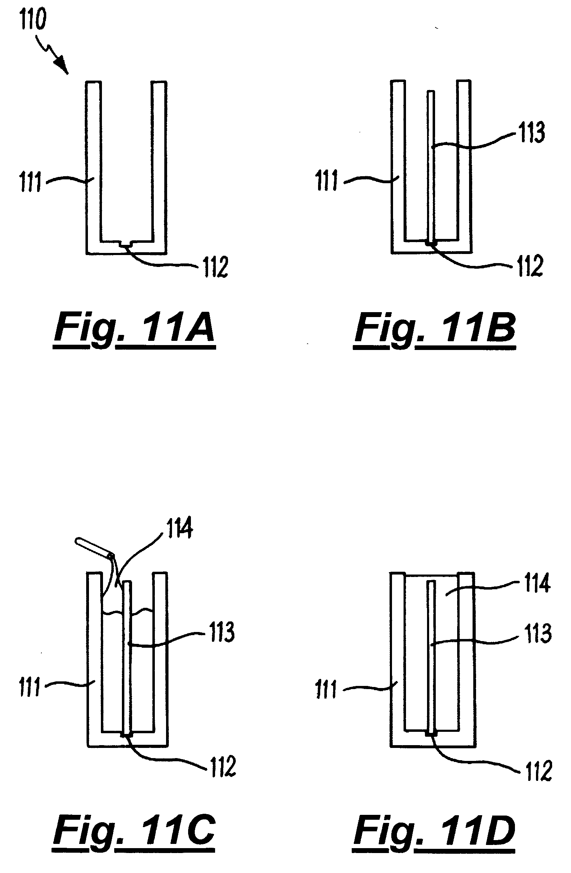

Figures 11A to 11D show schematically a method 110 of production of a subsea antifouling sign using a RTV silicone composition for forming the silicone-based transparent antifouling layer. In this method an open mould 111 has a groove 112 where a reflective vinyl substrate 113 comprising alphanumeric characters is placed. A RTV silicone composition 114 is subsequently poured into the mould 111. The RTV silicone composition 114 surrounds the reflective vinyl substrate 113. When the curing time has elapsed the subsea antifouling sign assembly is removed from the mould. The antifouling sign assembly comprises a marked reflective vinyl substrate which is almost entirely encapsulated in an antifouling RTV silicone composition. If necessary, the exposed part of the substrate can be sealed with a silicone or acrylic adhesive bead (such as a bead of cyanoacrylate material).

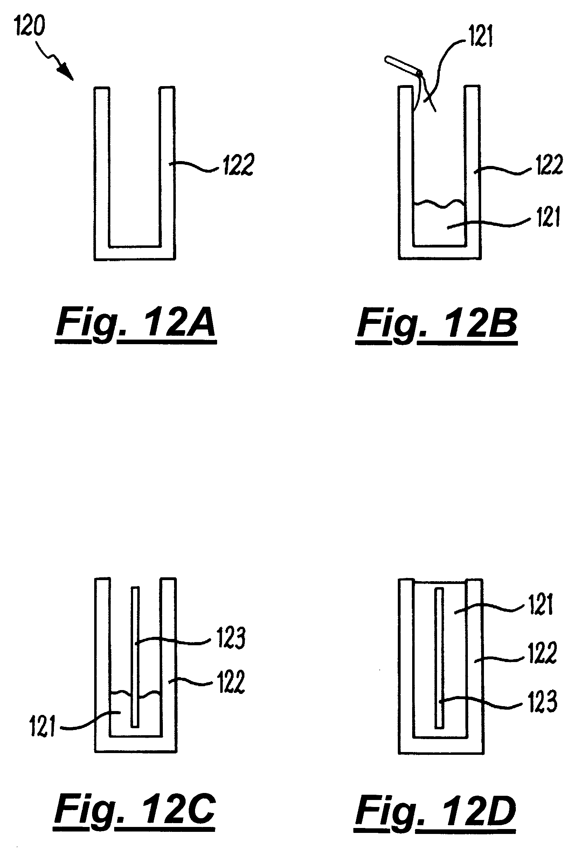

Figures 12A to 12D show schematically an alternative method 120 of production of a subsea antifouling sign using a RTV silicone composition for forming the silicone-based transparent antifouling layer. In this method an RTV silicone composition 121 is poured into a mould 122 such that the mould is partially filled. The silicone composition is allowed to partially set. Before the silicone composition hardens one end of a reflective vinyl substrate 123 comprising alphanumeric characters is positioned in the silicone composition. The partially set silicone holds the reflective vinyl substrate in desired position and the remaining silicone is added. Once cured the antifouling sign assembly comprises a marked reflective vinyl substrate fully encapsulated in an antifouling RTV silicone composition. By providing a reflective vinyl substrate, the sign assembly can be more clearly observed than a sign assembly without a reflective vinyl substrate at depths of at least 300m where light intensity is significantly reduced.

By providing a layer of transparent silicone over the reflective vinyl substrate, the life span of the fragile reflective vinyl substrate is increased as the substrate is protected from the high pressure present at depths of at least 300m. The layer of silicone also protects the reflective vinyl substrate from potential surface damage from impact during deployment or from diver or ROV operations or tidal debris.

The benefits of encapsulating a substrate of a subsea sign, for example by the above-described methods, include protection of the sign from surface damage or delamination due to hydrostatic pressures, hydrodynamic stresses, or impact from subsea equipment or debris. It will be appreciated that such benefits also arise from encapsulation of the substrate by transparent materials other than silicone antifouling compositions, where antifouling is perceived to be less of an issue. For example, sign assemblies for mounting on a structure to be deployed subsea at a depth greater than 300m may not require antifouling protection to the same extent as signs for equipment at shallower depths. At greater depths there may be reduced marine growth, or bio-fouling occurring over a significantly slower timeframe. The time required for such bio-fouling to become an issue may be in excess of the subsea project lifespan. Therefore in another aspect of the invention the layer of silicone-based transparent antifouling material layer as described above may be replaced by a layer of transparent material clear plastic laminate or film, toughened glass, perspex or other clear plastic material.

The invention provides a method of producing an antifouling sign assembly for mounting on a structure to be deployed subsea. The method comprises providing a substrate comprising indicia or markings, a layer of silicone-based transparent antifouling material having a minimum thickness of 1 mm, and joining the substrate and the layer such that the indicia or markings of the substrate are visible through the layer. The method also comprises fixing an attachment means to the substrate and/or the antifouling layer, the attachment means enabling mounting of the antifouling sign assembly to the structure.

Preferred embodiments use high consistency silicones, liquid silicone rubbers or room temperature vulcanising silicone to form the transparent antifouling layer.

Variations and modifications may be made to the above-described embodiments within the scope of the invention, and combinations of features other than those expressly claimed are within its scope. For example, additives may be incorporated in the silicone-based transparent antifouling layer, in a manner known in the art, in order to modify the physical or antifouling properties of the material. Liquids such as silicon oils may be incorporated in the antifouling layer to leach from the layer in use and improve resistance to aquatic or marine growth. Antibacterial additives such as silver nitrate or chlorides may be included in the material. Solid fillers or nanotubes may be mixed with the antifouling material to alter the mechanical properties of the silicone-based layer, for example to improve the resistance to damage in use.

## Claims

1. A method of producing an antifouling sign assembly for mounting on a structure to be deployed subsea, the method comprising:
providing a substrate comprising indicia or markings;
providing a layer of silicone-based transparent antifouling material having a minimum thickness of 1mm;
joining the substrate and the layer such that the indicia or markings of the substrate are visible through the layer; and
fixing an attachment means to the substrate and/or the antifouling layer, the attachment means enabling mounting of the antifouling sign assembly to the structure.

2. The method according to claim 1 wherein the layer is prefabricated.

3. The method according to claim 1 comprising forming the layer and joining it to the substrate.

4. The method according to claim 3 wherein the layer is formed by a technique selected from the group comprising: calendering, extrusion, compression moulding, dispersion coating, liquid lamination, ribbon flowing, liquid moulding and internal casting.

5. The method according to claim 3 or claim 4 comprising forming the layer of silicone-based transparent antifouling material in an online or continuous process.

6. The method according to any of claims 3 to 5 comprising forming the layer simultaneously with joining it to the substrate.

7. The method according to any preceding claim wherein the silicone-based transparent antifouling material comprises material selected from liquid silicone rubber (LSR) compositions, high consistency silicone (HCS) compositions or room temperature vulcanising (RTV) silicone compositions.

8. The method according to any preceding claim comprising marking the substrate by a technique selected from the group comprising: chemical etching, laser etching, rotary engraving, laser engraving, screen printing, pad printing, digital printing, subliminal printing, thermal transfer printing, photo etching, wet painting or powder painting.

9. The method according to any of claims 4 to 8 comprising moulding the layer with the substrate to join the layer to the substrate.

10. The method according to claim 9 comprising moulding the layer with the substrate in a frame, wherein the frame forms a part of a finished sign assembly.

11. An antifouling sign assembly for mounting on structure to be deployed subsea, the sign assembly comprising a substrate having indicia or markings formed thereon, an attachment means for attaching the sign assembly to the structure, and a layer of silicone-based transparent antifouling material having a minimum thickness of 1mm joined to the substrate such that the indicia or markings are visible through the layer.

12. The sign assembly according to claim 11, wherein the silicone-based transparent antifouling layer comprises a composition selected from the group comprising: liquid silicone rubber (LSR) compositions, high consistency silicone (HCS) compositions, room temperature vulcanising (RTV) silicone compositions or fluorosilicone compositions.

13. The sign assembly according to claim 11 or claim 12, wherein the substrate comprises indicia or markings printed, etched, or engraved on the surface.

14. The sign assembly according to any of claims 11 to 13, further comprising a frame, integrated with the layer of silicone-based transparent antifouling material, and wherein the layer of silicone-based transparent antifouling material is moulded into the frame.

15. The sign assembly according to any of claims 11 to 14 wherein the layer has a thickness range of 1 mm to 20mm.

## Patentansprüche

1. Verfahren zur Herstellung einer Antifäulnishinweisanordnung zum Anbringen an einer unterseeisch eingesetzten Struktur, wobei das Verfahren Folgendes umfasst:
Bereitstellen eines Substrates, das Anhaltspunkte oder Markierungen umfasst;
Bereitstellen einer Schicht an silikonbasiertem transparenten Antifäulnismaterial mit einer minimalen Dicke von 1 mm;
Zusammenfügen des Substrates und der Schicht, sodass die Anhaltspunkte oder Markierungen des Substrates durch die Schicht sichtbar sind; und
Anbringen eines Befestigungsmittels an dem Substrat und/oder der Antifäulnisschicht, wobei das Befestigungsmittel das Anbringen der Antifäulnishinweisanordnung an der Struktur ermöglicht.

2. Verfahren nach Anspruch 1, wobei die Schicht vorgefertigt ist.

3. Verfahren nach Anspruch 1, umfassend das Bilden der Schicht und Zusammenfügen mit dem Substrat.

4. Verfahren nach Anspruch 3, wobei die Schicht durch eine Technik gebildet wird, die ausgewählt ist aus der Gruppe, die Folgendes umfasst: Kalandrieren, Extrudieren, Formpressen, Dispersionsbeschichtung, Flüssiglaminieren, Bandfließen, Flüssigformen und internes Gießen.

5. Verfahren nach Anspruch 3 oder Anspruch 4, umfassend das Bilden der Schicht aus silikonbasiertem transparenten Antifäulnismaterial in einem Online- oder durchgehenden Verfahren.

6. Verfahren nach einem der Ansprüche 3 bis 5, umfassend das Bilden der Schicht simultan mit dem Zusammenfügen mit dem Substrat.

7. Verfahren nach einem vorhergehenden Anspruch, wobei das silikonbasierte transparente Antifäulnismaterial Material umfasst, das aus Flüssigsilikonkautschuk-(LSR)-Zusammensetzungen, Silikonzusammensetzungen mit hoher Konsistenz (HCS), oder Raumtemperaturvulkanisations-(RTV)-Silikonzusammensetzungen ausgewählt ist.

8. Verfahren nach einem vorhergehenden Anspruch, umfassen das Markieren des Substrates mit einer Technik, die ausgewählt ist aus der Gruppe, die Folgendes umfasst: chemische Ätzung, Laserätzung, Drehgravur, Lasergravur, Siebdruck, Tampondruck, Digitaldruck, Subliminaldruck, Thermotransferdruck, Fotoätzen,Nasslackierung oder Pulverlackierung.

9. Verfahren nach einem der Ansprüche 4 bis 8, umfassend das Formen der Schicht mit dem Substrat zum Zusammenfügen der Schicht mit dem Substrat.

10. Verfahren nach Anspruch 9, umfassend das Formen der Schicht mit dem Substrat in einem Rahmen, wobei der Rahmen einen Teil einer fertigen Hinweisanordnung bildet.

11. Antifäulnishinweisanordnung zum Anbringen an einer unterseeisch eingesetzten Struktur, wobei die Hinweisanordnung ein Substrat mit darauf gebildeten Anhaltspunkten oder Markierungen, ein Befestigungsmittel zum Befestigen der Hinweisanordnung an der Struktur und eine Schicht aus silikonbasiertem transparenten Antifäulnismaterial mit einer minimalen Dicke von 1 mm, die mit dem Substrat zusammengefügt ist, sodass die Anhaltspunkte oder Markierungen durch die Schicht sichtbar sind, umfasst.

12. Verfahren nach Anspruch 11, wobei die silikonbasierte transparente Antifäulnisschicht eine Zusammenfassung umfasst, die aus der Gruppe ausgewählt ist, die Folgendes umfasst: Flüssigsilikonkautschuk-(LSR)-Zusammensetzungen, Silikonzusammensetzungen mit hoher Konsistenz (HCS), Raumtemperaturvulkanisations-(RTV)-Silikonzusammensetzungen oder Fluorsilikonzusammensetzungen.

13. Hinweisanordnung nach Anspruch 11 oder 12, wobei das Substrat Anhaltspunkte oder Markierungen umfasst, die auf/in die Oberfläche gedruckt, geätzt oder eingraviert sind.

14. Hinweisanordnung nach einem der Ansprüche 11 bis 13, weiter umfassend einen Rahmen, der mit der Schicht aus silikonbasiertem transparenten Antifäulnismaterial integriert ist, und wobei die Schicht aus silikonbasiertem transparenten Antifäulnismaterial in den Rahmen geformt ist.

15. Hinweisanordnung nach einem der Ansprüche 11 bis 14, wobei die Schicht eine Dicke im Bereich von 1 mm bis 20 mm aufweist.

## Revendications

1. Une méthode pour produire un symbole anti-salissures sur une structure à déployer sous la mer, la méthode comprenant :
Fournir un substrat comprenant des inscriptions ou des marquages ,
Fournir une couche de produit anti-salissures transparent à base de silicone d'épaisseur minimum 1 mm,
Assembler le substrat et la couche pour que les inscriptions ou les marquages du substrat soient visibles à travers la couche, et
prévoir un moyen de fixation du substrat et/ou de la couche anti-salissures, le moyen permettant de fixer le symbole anti-salissures sur la structure.

2. La méthode conforme à la revendication 1 dans laquelle la couche est préfabriquée.

3. La méthode conforme à la revendication 1 comprenant la mise en forme de la couche et sa fixation sur le substrat.

4. La méthode conforme à la revendication 3 dans laquelle la couche est formée par l'une des techniques suivantes : calandrage, extrusion, moulage par compression, revêtement par dispersion, lamination liquide, écoulement de ruban, moulage liquide et moulage interne.

5. La méthode conforme à la revendication 3 ou à la revendication 4, comprenant la mise en forme de la couche de produit anti-salissures transparent à base de silicone dans une opération en ligne ou continue.

6. La méthode conforme à l'une des revendications 3 à 5, consistant à effectuer simultanément la mise en forme de la couche et son assemblage sur le substrat.

7. La méthode conforme à l'une des revendications précédentes, dans laquelle le produit anti-salissures transparent à base de silicone est l'un des produits suivants : liquid silicone rubber (LSR) (caoutchouc silicone liquide), high consistency silicone (silicone très visqueux) (HCS), ou room temperature vulcanising (RTV) (silicone de vulcanisation à la température ambiante).

8. La méthode conforme à lune des revendications précédentes consistant à marquer le substrat par l'une des techniques suivantes ; attaque chimique, gravure au laser, gravure rotative, gravure au laser, sérigraphie, impression par tampon, impression numérique, impression subliminale, impression par transfert thermique, photogravure, peinture humide ou peinture poudre.

9. La méthode conforme à l'une des revendications 4 à 8, consistant à mouler la couche avec le substrat pour assembler la couche sur le substrat.

10. La méthode conforme à la revendication 9 consistant à mouler la couche avec le substrat dans un cadre, le cadre faisant partie du symbole fini.

11. Un symbole anti-salissures pour fixation sur une structure à déployer sous la mer, le symbole comprenant un substrat sur lequel sont formées des inscriptions ou des marquages, un moyen pour fixer le symbole sur la structure, et une couche de produit anti-salissures transparent à base de silicone d'épaisseur minimum 1 mm assemblée sur le substrat pour que les inscriptions ou les marquages soient visibles à travers la couche.

12. Le symbole conforme à la revendication 11, dans lequel la couche anti-salissures transparente à base de silicone est formée de l'une des compositions suivantes : liquid silicone rubber (LSR) (caoutchouc silicone liquide), high consistency silicone (silicone très visqueux) (HCS), room temperature vulcanising (RTV) (silicone de vulcanisation à la température ambiante), ou fluorosilicone.

13. Le symbole conforme à la revendication 11 ou à la revendication 12, dans lequel le substrat comprend des inscriptions ou des marquages réalisés par impression, attaque chimique, ou gravure de la surface ?

14. Le symbole conforme à l'une des revendications 11 à 13, comprenant en outre un cadre intégré à la couche de produit anti-salissures transparents à base de silicone et dans laquelle la couche de produit anti-salissure transparente à base de silicone est moulée dans le cadre.

15. Le symbole conforme à l'une des revendications 11 à 14, dans lequel la couche a une épaisseur comprise entre 1 mm et 20 mm.
